# EUROPÄISCHE PATENTSCHRIFT

(11) **EP 3 528 984 B1**
(45) Veröffentlichungstag und Bekanntmachung des Hinweises auf die Patenterteilung: **28.09.2022**
(21) Anmeldenummer: 17787172.0
(22) Anmeldetag: 19.10.2017
(51) Int. Cl.: B23B 29/034

(54) **WERKZEUG ZUR BEARBEITUNG VON BOHRUNGEN**
TOOL FOR MACHINING BOREHOLES
OUTIL SERVANT À L'USINAGE D'ALÉSAGES

(30) Priorität: 20.10.2016 DE 102016119957
(43) Veröffentlichungstag der Anmeldung: 28.08.2019
(73) Patentinhaber: Schweiher Werkzeugbau GmbH&Co. KG, 74391 Erligheim (DE)
(72) Erfinder: SCHWEIHER, Alexander, 74391 Erligheim (DE)
(74) Vertreter: Schmid, Wolfgang
(86) Internationale Anmeldenummer: PCT/EP2017/076768
(87) Internationale Veröffentlichungsnummer: WO 2018/073373

(56) Entgegenhaltungen:
- EP-A2- 0 382 474
- DD-A1- 137 543
- DE-C- 554 058
- GB-A- 222 233
- GB-A- 191 419 634
- JP-A- 2006 136 970
- US-A- 899 759
- US-A- 1 172 781
- US-A- 1 359 963
- US-A- 2 956 456

## Beschreibung

Die Erfindung betrifft ein Werkzeug zur Bearbeitung von Bohrungen, mit einem Grundkörper, mit wenigstens drei um den Umfang des Grundkörpers verteilt angeordneten Schneidelementen und mit einer Verstelleinrichtung zur Verstellung der Schneidelemente in radialer Richtung nach der im Oberbegriff von Anspruch 1 näher definierten Art.

Ein gattungsgemäßes Werkzeug ist aus der US 1 172 781 A bekannt.

Die GB 19634 A beschreibt ein Räumwerkzeug, dessen Schneidelemente mit einem beweglichen Keilelement verstellt werden können.

Ein Bohr- und Fräswerkzeug mit eingesetzten Schneidmessern ist aus der DE 554 058 C bekannt.

Aus der US 2 956 456 A ist eine Bohrstange mit verstellbaren Schneidelementen bekannt.

Eine weitere Bohrstange ist in der EP 0 382 474 A2 beschrieben.

Aus dem allgemeinen Stand der Technik sind weitere derartige Werkzeuge, insbesondere als Aufbohrwerkzeuge bzw. Ausdrehköpfe, die zum präzisen Ausdrehen von runden Bohrungen dienen, bekannt. Die meisten dieser Ausdrehköpfe weisen ein oder zwei Schneidelemente auf, die in radialer Richtung verstellt werden können. Bei den zweischneidigen Ausdrehköpfen sind die Schneidelemente meist diametral gegenüberliegend angeordnet. Sie können teilweise radial und axial versetzt positioniert werden, um zwei Bearbeitungsschritte in einem Durchgang auszuführen. Die Schneidelemente werden zumeist manuell über mehrere einzelne Schrauben oder teilweise auch über eine zentrale Einstellschraube verstellt, wobei für das Feinjustieren der Schneidelemente entsprechende Befestigungsschrauben gelöst und anschließend wieder festgezogen werden müssen.

Des Weiteren sind Tiefbohrwerkzeuge bekannt, die zur Herstellung bzw. Bearbeitung von im Vergleich zu ihrem Durchmesser besonders langen Bohrungen dienen. Diese Tiefbohrwerkzeuge werden meist unter Zuhilfenahme von Gleit- oder Führungsleisten über die zylindrische Mantelfläche der Bohrung zentriert.

Des Weiteren ist es aus dem allgemeinen Stand der Technik bekannt, Reibahlen einzusetzen, um den Durchmesser von Bohrungen zu vergrößern. Meist werden Reibahlen eingesetzt, um eine hohe Form- und Maßgenauigkeit zu erzielen und die Oberflächenrauhigkeit zu verringern. Teilweise ist es möglich, den Durchmesser dieser Reibahlen in einem sehr geringen Maß zu verstellen, beispielsweise um verschleißbedingte Durchmesserabnahmen auszugleichen.

Aus der DE 103 33 061 B4 ist ein Bohrkopf mit mehreren an seinem Umfang angeordneten Führungselementen und mehreren an dem Umfang angeordneten Schneideinsätzen bekannt, die in Nuten verschieblich geführt sind.

Ein mehrere Schneidelemente aufweisendes Werkzeug zur Materialbearbeitung ist in der DE 10 2012 006 592 B4 beschrieben. Die Schneidelemente sind längsbeweglich in Radialdurchbrechungen des Werkzeugkörpers aufgenommen.

Die DE 10 2014 117 247 B3 beschreibt ein Werkzeug zum Ausdrehen einer Bohrung, das wenigstens ein Schneidelement aufweist.

Sämtliche der oben genannten Werkzeuge sind für bestimmte Einsatzzwecke gut, für andere weniger gut geeignet. Als sehr problematisch hat sich die Bearbeitung von Innenflächen von Bohrungen mit unterbrochenem Querschnitt bzw. von zusammenhängenden Hohlräumen in Werkstücken herausgestellt, die aus mehreren Bohrungen mit sich überschneidenden Radien bestehen. Das Erfordernis einer Bearbeitung solcher Bohrungen ergibt sich beispielsweise bei Doppelwellen- bzw. Doppelschneckenextrudern, bei denen zwei achsparallele Gewindespindeln bzw. Schneckenwellen ineinandergreifend in einem Zylinder laufen. Bei den vom Prinzip her ähnlichen Ringextrudern sind meist zwölf symmetrisch in einem Kreisring angeordnete, gleichsinnig drehende Schneckenwellen vorhanden, die in entsprechenden Bohrungen untergebracht sind. Da sich die Kreisquerschnitte der einzelnen Bohrungen überlagern, ergeben sich bei sämtlichen beschriebenen Extrudern zwischen den einzelnen Bohrungen jeweilige, die Bohrungen miteinander verbindende Öffnungen, wobei der Öffnungswinkel bei den Ringextrudern wesentlich größer ist als ei den Doppelwellen- bzw. Doppelschneckenextrudern.

Beim Einsatz der oben beschriebenen Werkzeuge bei derart ausgebildeten Werkstücken kommt es im Bereich der die jeweils benachbarten Bohrungen verbindenden Öffnungen aufgrund der auftretenden Schnittkräfte und der fehlenden seitlichen Führung zu Abweichungen von der gewünschten Werkzeugführung und damit zu Schwankungen in der radialen Schnittbewegung. Je länger die zu bearbeitende Bohrung ist, desto größer ist außerdem die Wahrscheinlichkeit, dass Vibrationen und Schwingungen des Werkzeugs auftreten, wodurch dessen Rundlauf negativ beeinträchtigt wird und sich die Genauigkeit der Bearbeitung verschlechtert. Außerdem kann es dazu kommen, dass sich die Schneidelemente der Bearbeitungswerkzeuge an den Rändern der Öffnungen verhaken, was zu Beschädigungen sowohl am Werkzeug als auch am Werkstück führen kann.

Ein weiteres Problem bei der Bearbeitung solcher einen unterbrochenen Schnitt aufweisenden Werkstücke mit den bekannten Werkzeugen besteht in der sehr aufwendigen Einstellung der Werkzeuge, die meist manuell außerhalb der Werkzeugmaschine erfolgen muss. Häufig ist außerdem ein Ausspannen, Nachjustieren und anschließendes wieder Einspannen des Werkzeugs erforderlich. Beispielsweise ist es im Fall von mehrere Schneidelemente aufweisenden Ausdrehköpfen notwendig, jedes einzelne Schneidelement bezüglich seiner radialen und axialen Position exakt einzustellen. Dies hat unerwünschte Maschinenstillstandszeiten zur Folge und verteuert damit zusätzlich die Bearbeitung der Werkstücke.

Gemäß dem bisherigen Stand der Technik werden solche Extruder daher durch Vorbohren, Stech- bzw. Tauchfräsen und abschließendes Drahterodieren hergestellt. Beim Erodieren handelt es sich jedoch um ein sehr aufwändiges und teures Bearbeitungsverfahren, das zudem den Einsatz spezieller Maschinen erfordert und sehr zeitintensiv ist.

Allerdings besteht auch bei den weiteren, oben genannten Werkzeugen gemäß dem Stand der Technik das Problem, dass diese teilweise eine aufwändige Bedienung erfordern und es mit denselben schwierig ist, maßhaltige Werkstücke herzustellen. Auch die lange Bearbeitungszeit ist bei den bekannten Werkzeugen zum Teil nicht akzeptabel.

Es ist daher Aufgabe der vorliegenden Erfindung, ein Werkzeug zur Bearbeitung von Bohrungen zu schaffen, das sehr exakt eingestellt werden kann, eine hohe Oberflächengüte gewährleistet und das einfach und kostengünstig eingesetzt werden kann. Erfindungsgemäß wird diese Aufgabe durch die in Anspruch 1 genannten Merkmale gelöst.

Durch die erfindungsgemäße Verstelleinrichtung mit den Halteelementen, den Keilelementen und dem Verstellring ist eine sehr einfache Verstellung der Schneidelemente in radialer Richtung möglich, so dass allein durch die Betätigung des Verstellrings der wirksame Durchmesser des erfindungsgemäßen Werkzeugs eingestellt werden kann. Mit anderen Worten ergibt sich also durch die Verstelleinrichtung eine zentrale Verstellung sämtlicher Schneidelemente mittels des Verstellrings. Bei dieser Verstellung wandeln die Keilelemente über ihre mit der Schrägfläche der Halteelemente zusammenwirkende Keil- bzw. Schrägfläche die durch den Verstellring auf die Keilelemente aufgebrachte Axialbewegung in die zur Einstellung des wirksamen Durchmessers des erfindungsgemäßen Werkzeugs notwendige Radialbewegung um.

Erfindungsgemäß wird dadurch eine sehr hohe Genauigkeit bei der Einstellung der radialen Position der Schneidelemente gewährleistet, sodass sich eine hohe Genauigkeit bezüglich des Rundlaufs und der Maßhaltigkeit ergibt, wodurch eine sehr exakte Bearbeitung der zu bearbeitenden Bohrung möglich ist.

Vorteilhaft ist dabei insbesondere die Einfachheit dieses synchron für alle Schneidelemente durchgeführten Einstellvorgangs, der nur eine geringe Zeit in Anspruch nimmt, so dass sich entsprechend kurze Maschinenstillstandszeiten ergeben. Durch den Verstellring und insbesondere die Keilelemente und die Halteelemente, die über die jeweiligen Schrägflächen miteinander in Wirkverbindung stehen, ergibt sich außerdem eine Untersetzung bei der Verstellung der Schneidelemente, welche die beschriebene Genauigkeit des Einstellvorgangs noch erhöht.

Das erfindungsgemäße Werkzeug erlaubt dabei nicht nur eine hohe Wiederholgenauigkeit, sondern auch sehr hohe Schnittgeschwindigkeiten, so dass das erfindungsgemäße Werkzeug für die Bearbeitung der unterschiedlichsten Werkstücke, beispielsweise auch von aus hochfesten Materialien bestehenden Werkstücken, geeignet ist. Durch die vergleichsweise hohe Anzahl an Schneidelementen kann außerdem der Vorschub des Werkzeugs erhöht werden, was die Bearbeitungszeit und damit auch die Bearbeitungskosten verringert.

Obwohl das erfindungsgemäße Werkzeug zur Bearbeitung der unterschiedlichsten Bohrungen geeignet ist, eignet es sich in besonderer Weise zur Bearbeitung von Bohrungen mit unterbrochenem Schnitt, wie sie beispielsweise bei Extrudergehäusen auftreten. Dabei ergibt sich durch die wenigstens drei um den Umfang des Grundkörpers des erfindungsgemäßen Werkzeugs verteilt angeordneten Schneidelementen zu jedem Zeitpunkt eine ausreichende Abstützung des Werkzeugs an der Mantelfläche der Bohrung und damit eine erhöhte Steifigkeit des gesamten Werkzeugs.

Ein weiterer Vorteil des erfindungsgemäßen Werkzeugs ist die verbesserte Standzeit der Schneidelemente, die sich durch die oben beschriebene Führung des Werkzeugs innerhalb der bearbeiteten Bohrung ergibt.

Erfindungsgemäß weist der Verstellring ein Innengewinde auf, das mit einem Außengewinde eines mit den Keilelementen verbundenen Verbindungsrings in Wirkverbindung steht. Ein solcher als Verbindungsglied zwischen dem Innengewinde des Verstellrings und den Keilelementen dienender Verbindungsring stellt eine sehr einfache Ausführungsform dar, mit der die synchrone Betätigung sämtlicher Schneidelemente erreicht werden kann. Des Weiteren ergibt sich durch das Gewinde eine für eine exakte Verstellung der Schneidelemente vorteilhafte Unterstützung zwischen der Bewegung des Verstellrings und derjenigen der Schneidelemente.

Um eine selbsttätige Klemmung für die erfindungsgemäße Verstelleinrichtung zu erreichen, ist des Weiteren vorgesehen, dass das Innengewinde und das Außengewinde als Linksgewinde ausgeführt sind. Da sich Werkzeuge üblicherweise rechtsherum drehen, führt der Einsatz eines Linksgewindes dazu, dass die bei der Schnittbewegung auftretende Kraftwirkung in Schließrichtung des Gewindes wirkt, so dass dieses selbsthemmend ist.

In einer vorteilhaften Ausführung der Erfindung kann vorgesehen sein, dass die Keilelemente mittels jeweiliger Führungen gegenüber den Halteelementen geführt sind. Diese Maßnahme erhöht die Genauigkeit des erfindungsgemäßen Werkzeugs erheblich, da sich die Halteelemente nur noch in der gewünschten Richtung gegenüber den Keilelementen bewegen können.

Als besonders praxistauglich hat es sich dabei herausgestellt, wenn die Führungen als Schwalbenschwanzführungen ausgebildet sind. Des Weiteren ergibt sich auf diese Weise eine besonders hohe Steifigkeit der Führungen.

Eine weitere sehr vorteilhafte Ausgestaltung der Erfindung kann darin bestehen, dass die Schneidelemente mittels jeweiliger Klemmhalteeinrichtungen an dem Halteelement gehalten sind. Derartige Klemmhalteeinrichtungen, die auch als Kurzklemmhalter bezeichnet werden, können dazu eingesetzt werden, eventuell zwischen einzelnen Schneidelementen bestehende Toleranzen auszugleichen, indem das Schneidelement gegenüber dem Halteelement verstellt wird. Durch die Klemmhalteeinrichtung ist es also möglich, sowohl die gegebenenfalls in dem erfindungsgemäßen Werkzeug enthaltene Toleranz als auch die bei den einzelnen Schneidelementen untereinander vorhandenen Maßabweichungen auszugleichen.

In einer weiteren sehr vorteilhaften Weiterbildung der Erfindung kann vorgesehen sein, dass der Grundkörper an einer einer Antriebsseite des Werkzeugs abgewandten Seite eine Abstützeinrichtung aufweist. Dadurch ist eine Abstützung des Werkzeugs auf der der Spindel gegenüberliegenden Seite möglich, was die Bearbeitung sehr langer Bohrungen mit hoher Genauigkeit ermöglicht. Beispielsweise kann eine solche Abstützeinrichtung eine in einem Gegenlager mündende, zum Beispiel als Hartmetallstange ausgebildete Verlängerung aufweisen. Bei der Abstützeinrichtung handelt es sich um eine Art Schnittstelle, an der die beschriebene Verlängerung angebracht werden kann.

Wenn in einer weiteren vorteilhaften Ausgestaltung der Erfindung wenigstens fünf Schneidelemente, wenigstens fünf die Schneidelemente haltende Halteelemente und wenigstens fünf mit den Halteelementen in Wirkverbindung stehende Keilelemente vorgesehen sind, ergibt sich eine besondere Eignung des erfindungsgemäßen Werkzeugs zur Bearbeitung von zum Beispiel bei Extrudergehäusen vorkommenden Bohrungen mit unterbrochenem Schnitt, da von den wenigstens fünf Schneidelementen in Abhängigkeit vom Öffnungswinkel zwischen den benachbarten Bohrungen meist vier im Eingriff sind, wodurch eine besonders gute Abstützung des Werkzeugs an der Mantelfläche der Bohrung gewährleistet ist.

Nachfolgend ist ein Ausführungsbeispiel der Erfindung anhand der Zeichnung prinzipmäßig dargestellt.

Es zeigt:
- Fig. 1: eine Seitenansicht eines erfindungsgemäßen Werkzeugs;
- Fig. 2: das Werkzeug aus Fig. 1 mit einer zusätzlichen Abstützeinrichtung;
- Fig. 3: einen Schnitt nach der Linie III - III aus Fig. 2; und
- Fig. 4: einen Schnitt nach der Linie IV - IV aus Fig. 2.

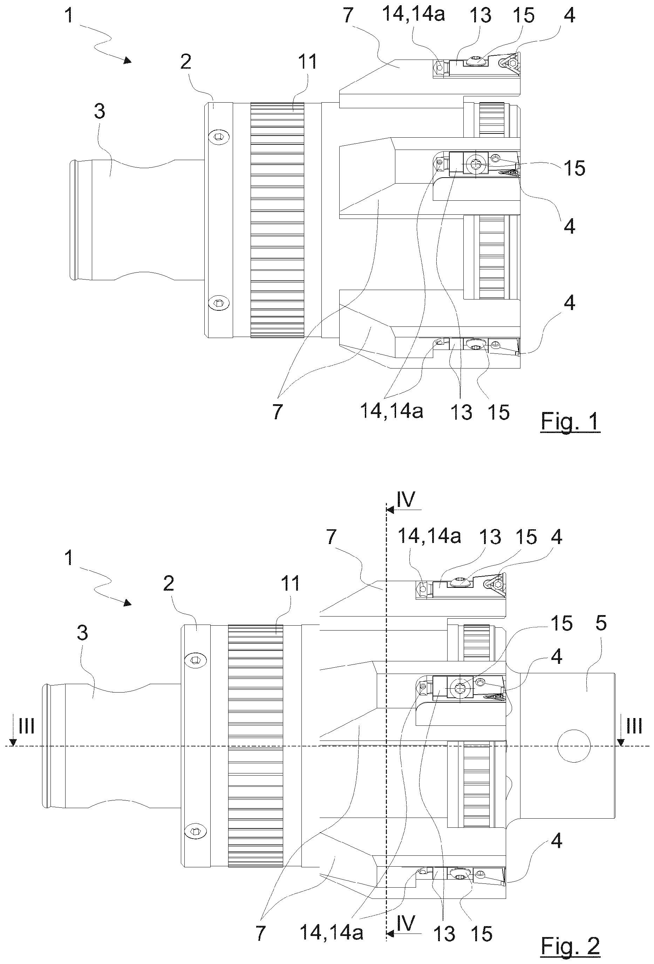

Fig. 1 zeigt in einer Seitenansicht ein Werkzeug 1 zur Bearbeitung nicht dargestellter Bohrungen. Bei den Bohrungen kann es sich zum Beispiel um an ihrem Umfang nicht vollständig geschlossene Bohrungen handeln, wie sie beispielsweise in Doppelwellen- bzw. Doppelschneckenextrudern oder Ringextrudern zu finden sind. Jedoch ist das Werkzeug 1 auch zur Bearbeitung anderer Bohrungen geeignet, bei denen eine sehr präzise Bearbeitung notwendig ist.

Das Werkzeug 1 weist einen Grundkörper 2 auf, der an einem Ende eine Schnittstelle 3 zum Aufnehmen des Werkzeugs 1 in einer nicht dargestellten Bearbeitungsmaschine aufweist. Die dargestellte Ausführungsform der Schnittstelle 3, die sich wie üblich auf einer Antriebsseite des Werkzeugs 1 befindet, ist als rein beispielhaft anzusehen und kann auch in einer von der dargestellten Form abweichenden Art und Weise ausgebildet sein. Um den Umfang des Grundkörpers 2 sind im vorliegenden Fall fünf Schneidelemente 4 angeordnet, die im dargestellten Ausführungsbeispiel als Wendeschneidplatten ausgebildet sind. Im Allgemeinen weist das Werkzeug wenigstens drei Schneidelemente 4 auf. In der Seitenansicht gemäß Fig. 1 sind lediglich drei der fünf Schneidelemente 4 zu erkennen. Vorzugsweise sind die Schneidelemente 4 gleichmäßig um den Umfang des Grundkörpers 2 des Werkzeugs 1 verteilt angeordnet, d. h. diese sind jeweils um 72° gegenüber einander versetzt.

Statt der fünf Schneidelemente 4 wäre grundsätzlich auch eine andere Anzahl an Schneidelementen 4 denkbar. Für die Bearbeitung von Doppelwellen- bzw. Doppelschneckenextrudern und teilweise auch Ringextrudern hat sich diese Anzahl jedoch als besonders gut geeignet herausgestellt, da auf diese Weise gewährleistet ist, dass sich stets mehr als die Hälfte der Schneidelemente 4 in Eingriff mit dem zu bearbeitenden Werkstück befinden und sich somit an dem Werkstück abstützen. Bei der Bearbeitung eines Doppelwellen- bzw. Doppelschneckenextruderns befinden sich meist sogar vier der fünf Schneidelemente 4 in Eingriff, da der Öffnungswinkel, um den sich zwei benachbarte Bohrungen eines solchen Extruders überlappen, meist kleiner ist als 72°.

Die exakte Anzahl von fünf Schneidelementen 4 hat sich als besonders guter Kompromiss zwischen einer guten Führung des Werkzeugs 1 einerseits und einer einfachen Möglichkeit zur Unterbringung der Einzelteile der Verstelleinrichtung 6 herausgestellt. Grundsätzlich kann es daher bei Werkzeugen 1 mit einem größeren Durchmesser sinnvoll sein, mehr als die fünf Schneidelemente 4 vorzusehen. Umgekehrt kann es bei Werkzeugen 1 mit einem kleineren Durchmesser erforderlich sein, auf eines der Schneidelemente 4 zu verzichten.

Bei der in Fig. 2 dargestellten Ausführungsform des Werkzeugs 1 ist an der der Antriebsseite des Werkzeugs 1 gegenüberliegenden Seite, also an der der Schnittstelle 3 gegenüberliegenden Seite, eine Abstützeinrichtung 5 vorgesehen, deren Funktionsweise zu einem späteren Zeitpunkt näher erläutert wird.

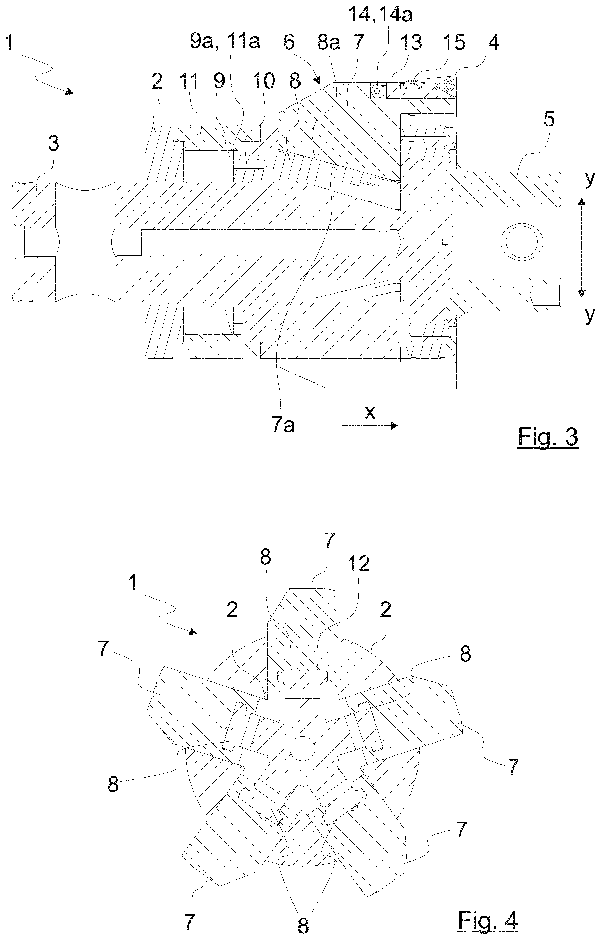

Die Schneidelemente 4 können mittels einer in dem Schnitt von Fig. 3 detailliert dargestellten Verstelleinrichtung 6 in der mit "y" bezeichneten radialen Richtung des Werkzeugs 1 verstellt werden. Hierzu weist die Verstelleinrichtung 6 jeweilige Halteelemente 7 auf, die zum Halten jeweils eines der Schneidelemente 4 dienen. Die Halteelemente 7 weisen an ihren von den Schneidelementen 4 abgewandten Seiten jeweilige Schrägflächen 7a auf, über die sie mit Keilelementen 8 in Wirkverbindung stehen, die entsprechende Schrägflächen 8a aufweisen.

Sämtliche der Keilelemente 8 sind im vorliegenden Fall mittels eines Verbindungsrings 9 miteinander verbunden. Im dargestellten Ausführungsbeispiel ist der Verbindungsring 9 mit den einzelnen Keilelementen 8 mittels jeweiliger Schrauben 10 verschraubt. Zur Betätigung des Verbindungsrings 9 dient ein Verstellring 11, der wie der Verbindungsring 9 um den gesamten Umfang des Grundkörpers 2 des Werkzeugs 1 verläuft und der von einer Bedienperson manuell verdreht werden kann. Der Verstellring 11 ist auch in den Seitenansichten der Figuren 1 und 2 zu erkennen.

Der Verstellring 11 wirkt über den Verbindungsring 9 auf die Keilelemente 8 und ist damit in der Lage, diese in der mit "x" bezeichneten axialen Richtung zu verschieben. Diese axiale Verschiebung der Keilelemente 8 bewirkt über die Schrägflächen 8a derselben und die mit den Schrägflächen 8a der Keilelemente 8 zusammenwirkenden Schrägflächen 7a der Halteelemente 7 die oben beschriebene radiale Bewegung der Halteelemente 7. Da die Schneidelemente 4 mit den Halteelementen 7 verbunden bzw. an denselben angebracht sind, führt dies entsprechend zu einer radialen Verstellung der Schneidelemente 4.

Die Keilelemente 8 sind in jeweiligen, in dem Schnitt von Fig. 4 zu erkennenden Führungen 12 in bzw. gegenüber den Halteelementen 7 geführt, sodass die Relativbewegung der Halteelemente 7 gegenüber den Keilelementen 8 nur noch in der gewünschten axialen Richtung stattfinden kann. Im dargestellten Ausführungsbeispiel handelt es sich bei den Führungen 12 um Schwalbenschwanzführungen. Während im vorliegenden Fall aus Platzgründen die Halteelemente 7 die die Führungen 12 bildenden Aussparungen und die Keilelemente 8 die entsprechenden, in diese Aussparungen eingreifenden Vorsprünge aufweisen, wäre gegebenenfalls auch eine umgekehrte Ausgestaltung der Führungen 12 möglich.

Die Verbindung zwischen dem Verstellring 11 und dem Verbindungsring 9 erfolgt über ein Innengewinde 11a des Verstellrings 11, das mit einem Außengewinde 9a des Verbindungsrings 9 in Wirkverbindung steht bzw. in Eingriff ist. Auf diese Weise wird durch ein Verdrehen des Verstellrings 11 eine entsprechende axiale Bewegung des Verbindungsrings 9 und somit der mit dem Verbindungsring 9 verbundenen Keilelemente 8 gemäß dem Pfeil x bewirkt.

Im vorliegenden Fall sind sowohl das Innengewinde 11a des Verstellrings 11 als auch das Außengewinde 9a des Verbindungsrings 9 als Linksgewinde ausgeführt. Dies führt zu einer Fixierung der über den Verstellring 11 eingestellten Position der Schneidelemente 4, da die Rotationsbewegung des Werkzeugs 1 in derselben Richtung wie die beiden Linksgewinde wirkt und somit eine ungewollte Verstellung der Position der Schneidelemente 4 verhindert wird.

Das Linksgewinde wirkt also im Prinzip den auf die Schneidelemente 4 wirkenden Fliehkräften entgegen. Letztendlich führt dies zu einer spielfreien Verbindung zwischen dem Verstellring 11 und den Halteelementen 7. Selbstverständlich wäre es auch möglich, die Verstelleinrichtung 6 mit einer zusätzlichen Klemmeinrichtung zu klemmen.

Vorzugsweise handelt es sich bei den beiden Gewinden 9a und 11a um Feingewinde mit einer Steigung von 0,5 mm oder weniger. Durch die geringe Gewindesteigung und die einen relativ geringen Steigungswinkel aufweisenden Schrägflächen 7a und 8a ergibt sich eine verhältnismäßig große Untersetzung bei der Verstellung der Schneidelemente 4 im Vergleich zu der Verdrehbewegung des Verstellrings 11, was eine sehr exakte Einstellung der radialen Position der Halteelemente 7 und damit der Schneidelemente 4 ermöglicht.

Der Verstellring 11 kann mit einer nicht dargestellten Skala ausgestattet sein, die vorzugsweise auch einen Nonius aufweist und mit der eine exakte Einstellung der radialen Position der Schneidelemente 4 kontrolliert werden kann.

Aus Fig. 3 geht des Weiteren hervor, dass die Schneidelemente 4 mittels jeweiliger, auch als Kurzklemmhalter bezeichneter Klemmhalteeinrichtungen 13 an dem Halteelement 7 gehalten sind. Die Klemmhalteeinrichtungen 13 weisen dabei jeweilige Einrichtungen 14 auf, mit denen die radiale Position der Schneidelemente 4 zusätzlich eingestellt werden kann. Diese Einrichtungen zur Einstellung der radialen Position der Schneidelemente 4 weisen wiederum jeweilige Verstellschrauben 14a auf, die in sämtlichen Figuren 1, 2 und 3 zu erkennen sind. Zusätzlich sind die Klemmhalteeinrichtungen 13 mittels jeweiliger Fixierschrauben 15 an dem jeweiligen Halteelement 7 befestigt.

Bei der Bearbeitung von im Verhältnis zu ihrem Durchmesser sehr langen Bohrungen, wie sie zum Beispiel bei Ringextrudern, jedoch auch bei anderen Werkstücken, vorkommen, kann die oben beschriebene Abstützeinrichtung 5 verwendet werden, um eine Abstützung des Werkzeugs 1 auf der der Schnittstelle 3 gegenüberliegenden Seite zu erreichen. Eine solche Abstützung kann beispielsweise durch eine an der Abstützeinrichtung 5 angebrachte, als Verlängerung dienende Hartmetallstange gebildet sein. Die Verlängerung mündet vorzugsweise in einem nicht dargestellten Gegenlager, das hinter dem Werkstück angeordnet ist und gegebenenfalls an diesem fixiert werden kann. Vorzugsweise wird das Gegenlager so positioniert, dass es mit der Längsachse des Werkzeugs 1 fluchtet. Des Weiteren sollte das Gegenlager so ausgebildet sein, dass sowohl die Rotation als auch der Vorschub des Werkzeugs 1 und der an demselben angebrachte Verlängerung ermöglicht wird. Beispielsweise kann die Verlängerung gleitend gelagert werden, wobei in diesem Fall das Lagerspiel ausreichend groß sein sollte, um die beschriebene Rotations- und Vorschubbewegung zu ermöglichen. Andererseits sollte das Lager keine Exzentrizität und keine Laufabweichung ermöglichen, die zu Abweichungen in der Genauigkeit der Bearbeitung des Werkstücks mittels des Werkzeugs 1 führen könnten.

Die Abstützeinrichtung 5 ist somit insbesondere für solche Bearbeitungen vorgesehen, bei denen offene Kreisquerschnitte mit Bogenwinkelmaßen weit über 180° bearbeitet werden sollen und eine ausreichende Abstützung auch durch die in Fig. 1 dargestellte Ausführungsform des Werkzeugs 1 nicht gegeben ist. Konkret würden beispielsweise bei einem solchen Ringextruder lediglich zwei der im vorliegenden Fall fünf Schneidelemente 4 an der zu bearbeitenden Bohrungsfläche des Werkstücks anliegen, wodurch sich eine mangelnde Abstützung des Werkzeugs 1 an der Wandung der zu bearbeitenden Bohrung ergäbe, was jedoch durch die beschriebene Abstützeinrichtung 5 ausgeglichen werden kann.

Obwohl die Schneidelemente 4 im vorliegenden Fall auf einer axialen Kreisebene angeordnet sind, wäre es auch möglich, die Schneidelemente 4 über die beiden Schrägflächen 7a und 8a axial und radial versetzt zueinander anzuordnen, so dass eine mehrstufige Bearbeitung in einem Arbeitsschritt möglich wäre.

In nicht dargestellter Weise kann in dem Grundkörper 2 eine Kühlmittelzufuhr zur Zufuhr von Kühlmittel zu den Schneidelementen 4 vorgesehen sein.

## Patentansprüche

1. Werkzeug (1) zur Bearbeitung von Bohrungen, mit einem Grundkörper (2), mit wenigstens drei um den Umfang des Grundkörpers (2) verteilt angeordneten Schneidelementen (4) und mit einer Verstelleinrichtung (6) zur Verstellung der Schneidelemente (4) in radialer Richtung (y), wobei
die Verstelleinrichtung (6) jeweilige Halteelemente (7) zum Halten des jeweiligen Schneidelements (4), jeweilige mit den Halteelementen (7) in Wirkverbindung stehende, jeweilige Schrägflächen (8a) aufweisende Keilelemente (8) und einen Verstellring (11) aufweist, der zumindest mittelbar auf die Keilelemente (8) wirkt, um diese in axialer Richtung (x) zu verschieben, wobei die Halteelemente (7) jeweilige mit den Schrägflächen (8a) der Keilelemente (7) derart zusammenwirkende Schrägflächen (7a) aufweisen, dass eine axiale Verschiebung der Keilelemente (8) zu einer radialen Bewegung des jeweiligen Halteelements (7) führt,
**dadurch gekennzeichnet, dass**
der Verstellring (11) ein Innengewinde (11a) aufweist, das mit einem Außengewinde (9a) eines mit den Keilelementen (8) verbundenen Verbindungsrings (9) in Wirkverbindung steht, und dass das Innengewinde (11a) und das Außengewinde (9a) als Linksgewinde ausgeführt sind.

2. Werkzeug nach Anspruch 1,
**dadurch gekennzeichnet, dass**
die Keilelemente (8) mittels jeweiliger Führungen (12) gegenüber den Halteelementen (7) geführt sind.

3. Werkzeug nach Anspruch 2,
**dadurch gekennzeichnet, dass**
die Führungen (12) als Schwalbenschwanzführungen ausgebildet sind.

4. Werkzeug nach einem der Ansprüche 1 bis 3,
**dadurch gekennzeichnet, dass**
die Schneidelemente (4) mittels jeweiliger Klemmhalteeinrichtungen (13) an dem Halteelement (7) gehalten sind.

5. Werkzeug nach einem der Ansprüche 1 bis 4,
**dadurch gekennzeichnet, dass**
der Grundkörper (2) an einer einer Antriebsseite des Werkzeugs (1) abgewandten Seite eine Abstützeinrichtung aufweist.

6. Werkzeug nach einem der Ansprüche 1 bis 5,
**dadurch gekennzeichnet, dass**
wenigstens fünf Schneidelemente (4), wenigstens fünf die Schneidelemente (4) haltende Halteelemente (7) und wenigstens fünf mit den Halteelementen (7) in Wirkverbindung stehende Keilelemente (8) vorgesehen sind.

## Claims

1. Tool (1) for machining bores, having a basic body (2), having at least three cutting elements (4) that are arranged in a manner distributed around the circumference of the basic body (2), and having an adjusting device (6) for adjusting the cutting elements (4) in a radial direction (y), wherein
the adjusting device (6) has respective holding elements (7) for holding the respective cutting element (4), respective wedge elements (8) that are operatively connected to the holding elements (7) and have respective inclined surfaces (8a), and an adjusting ring (11) that acts at least indirectly on the wedge elements (8) in order to move them in translation in an axial direction (x), wherein the holding elements (7) have respective inclined surfaces (7a) that cooperate with the inclined surfaces (8a) of the wedge elements (7) such that an axial movement in translation of the wedge elements (8) results in a radial movement of the respective holding element (7),
**characterized in that**
the adjusting ring (11) has an internal thread (11a) which is operatively connected to an external thread (9a) of a connecting ring (9) connected to the wedge elements (8), and **in that** the internal thread (11a) and the external thread (9a) are embodied as a left-hand thread.

2. Tool according to Claim 1,
**characterized in that**
the wedge elements (8) are guided with respect to the holding elements (7) by means of respective guides (12).

3. Tool according to Claim 2,
**characterized in that**
the guides (12) are in the form of dovetail guides.

4. Tool according to one of Claims 1 to 3,
**characterized in that**
the cutting elements (4) are held on the holding element (7) by means of respective clamping holding devices (13).

5. Tool according to one of Claims 1 to 4,
**characterized in that**
the basic body (2) has a supporting device on a side facing away from a drive side of the tool (1).

6. Tool according to one of Claims 1 to 5,
**characterized in that**
at least five cutting elements (4), at least five holding elements (7) holding the cutting elements (4), and at least five wedge elements (8) operatively connected to the holding elements (7) are provided.

## Revendications

1. Outil (1) servant à l'usinage d'alésages, avec un corps de base (2), avec au moins trois éléments de coupe (4) répartis sur la périphérie du corps de base (2) et avec un système de réglage (6) pour régler les éléments de coupe (4) dans la direction axiale (y), dans lequel le système de réglage (6) comporte des éléments de maintien (7) individuels pour maintenir chaque élément de coupe (4), des éléments en coin (8) individuels présentant des surfaces inclinées (8a) individuelles coopérant avec les éléments de maintien (7) et une bague de réglage (11) qui agit au moins indirectement sur les éléments en coin (8) afin de faire coulisser ceux-ci dans la direction axiale (x), les éléments de maintien (7) présentant des surfaces inclinées (7a) individuelles interagissant avec les surfaces inclinées (8a) des éléments en coin (8) de telle sorte qu'un coulissement axial des éléments en coin (8) produit un déplacement radial de l'élément de maintien (7) correspondant,
**caractérisé**
**en ce que** la bague de réglage (11) présente un filetage intérieur (11a) qui coopère avec un filetage extérieur (9a) d'une bague de raccordement (9) reliée avec les éléments en coin (8), et que le filetage intérieur (11a) et le filetage extérieur (9a) sont configurés comme des filetages à gauche.

2. Outil selon la revendication 1,
**caractérisé**
**en ce que** les éléments en coin (8) sont guidés au moyen de glissières (12) individuelles par rapport aux éléments de maintien (7).

3. Outil selon la revendication 2,
**caractérisé**
**en ce que** les glissières (12) sont configurées comme des glissières en queue d'aronde.

4. Outil selon une des revendications 1 à 3,
**caractérisé**
**en ce que** les éléments de coupe (4) sont fixés au moyen systèmes de serrage (13) individuels sur l'élément de maintien (7).

5. Outil selon une des revendications 1 à 4,
**caractérisé en ce que**
le corps de base (2) présente sur un côté opposé à un côté d'entraînement de l'outil (1) un système de support.

6. Outil selon une des revendications 1 à 5,
**caractérisé**
**en ce qu'**au moins cinq éléments de coupe (4), au moins cinq éléments de maintien (7) maintenant les éléments de coupe (4) et au moins cinq éléments en coin (8) coopérant avec les éléments de maintien (7) sont prévus.
